(19) **Europäisches Patentamt / European Patent Office / Office européen des brevets**

(11) **EP 4 744 894 A1**

(12) # EUROPEAN PATENT APPLICATION
published in accordance with Art. 153(4) EPC

(43) Date of publication:
**20.05.2026 Bulletin 2026/21**

(21) Application number: **24854179.9**

(22) Date of filing: **08.08.2024**

(51) International Patent Classification (IPC):
**B32B 27/30** (2006.01)    **B32B 1/08** (2006.01)
**C08L 27/12** (2006.01)    **C08L 27/18** (2006.01)
**C08L 101/00** (2006.01)    **F16L 11/04** (2006.01)

(52) Cooperative Patent Classification (CPC):
**B32B 1/08; B32B 27/30; C08L 27/12; C08L 27/18;
C08L 101/00; F16L 11/04**

(86) International application number:
**PCT/JP2024/028567**

(87) International publication number:
**WO 2025/037589 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.08.2023 JP 2023132172**

(71) Applicant: **Daikin Industries, Ltd.
Osaka-shi, Osaka 530-0001 (JP)**

(72) Inventors:
• **KAMIYA, Yukinori**
  **Osaka-Shi, Osaka 530-0001 (JP)**
• **KOMAZAWA, Kozue**
  **Osaka-Shi, Osaka 530-0001 (JP)**

(74) Representative: **Hoffmann Eitle
Patent- und Rechtsanwälte PartmbB
Arabellastraße 30
81925 München (DE)**

(54) ## LAMINATE IN CONTACT WITH FUEL

(57)    Provided is a laminate that exhibits excellent low fuel permeability to a fuel containing a compound consisting of carbon atom, hydrogen atom, and oxygen atom and having carbonyl group or ether bond.

EP 4 744 894 A1

## Description

TECHNICAL FIELD

The present disclosure relates to a laminate in contact with fuel.

BACKGROUND ART

Patent Document 1 discloses a laminate having a layer (C) composed of a chlorotrifluoroethylene copolymer and a layer (K) composed of a fluorine-free organic material, wherein the chlorotrifluoroethylene copolymer has a melt flow rate of 15.0 to 40.0 (g/10 min) and contains 15.0 to 25.0 mol% of chlorotrifluoroethylene unit based on all monomer units.
Patent Document 2 discloses a laminate comprising a fluororesin layer comprising a fluororesin material and a non-fluororesin layer comprising a non-fluororesin, wherein the fluororesin has a carbonyl group, the total number of carbonyl groups is 1 or more and less than 800 per $10^6$ main-chain carbon atoms, the fluororesin comprises a fluororesin material containing ethylene unit and tetrafluoroethylene unit, and when the fluororesin material is heated at a rate of 10°C/min under an air atmosphere, the onset temperature of thermal decomposition at which the mass of the fluororesin material decreases by 1 mass% is 390°C or higher.

RELATED ART

PATENT DOCUMENTS

Patent Document 1: Japanese Patent Laid-Open No. 2010-030276
Patent Document 2: Japanese Patent Laid-Open No. 2022-58284

SUMMARY OF THE INVENTION

PROBLEM TO BE SOLVED BY THE INVENTION

An object of the present disclosure is to provide a laminate having excellent low fuel permeability to fuel containing a compound consisting of carbon atom, hydrogen atom and oxygen atom and having carbonyl group or ether bond.

MEANS FOR SOLVING THE PROBLEM

The present disclosure provides a laminate that comes into contact with a fuel, wherein the fuel includes at least a compound (1) consisting of carbon atom, hydrogen atom and oxygen atom and having carbonyl group or ether bond, and the laminate comprises at least a fluororesin layer comprising a fluororesin containing chlorotrifluoroethylene unit.

EFFECTS OF INVENTION

The present disclosure can provide a laminate having excellent low fuel permeability to fuel containing a compound consisting of carbon atom, hydrogen atom and oxygen atom and having carbonyl group or ether bond.

DESCRIPTION OF EMBODIMENTS

In the following, specific embodiments of the present disclosure will be described in detail, but the present disclosure is not limited to the following embodiments.
Heretofore, laminates that exhibit low fuel permeability to gasoline or low fuel permeability to alcohol-containing gasoline have been known.
For example, Patent Document 1 discloses measurement of a fuel permeability coefficient of a laminate having the above-described configuration using CE10, a fuel containing 10 volume% ethanol in a 50:50 (by volume) mixture of isooctane and toluene.
Patent Document 2 discloses measurement of a fuel permeation rate of a laminate having the above-described configuration using CE20, CE50, or CE85, which are fuels containing ethanol at 20, 50, or 80 volume%, respectively.
However, what kind of laminated structure is needed for inhibiting permeation of fuel containing a compound consisting of carbon atom, hydrogen atom and oxygen atom and having carbonyl group or ether bond has not been fully explored to date.

We have now found that laminates exhibit surprisingly low fuel permeability to fuel containing a compound consisting of carbon atom, hydrogen atom and oxygen atom and having carbonyl group or ether bond by introducing a fluororesin layer comprising a fluororesin containing chlorotrifluoroethylene unit into the laminate.

Thus, the laminate of the present disclosure is a laminate that comes into contact with a fuel containing at least a compound (1) consisting of a carbon atom, a hydrogen atom and an oxygen atom and having a carbonyl group or an ether bond, the laminate comprising at least a fluororesin layer comprising a fluororesin containing chlorotrifluoroethylene unit.

In the following, the structure of the laminate of the present disclosure will be described in detail.

(Fuel)

The laminate of the present disclosure is used in contact with fuel containing at least a compound (1) consisting of carbon atom, hydrogen atom and oxygen atom and having carbonyl group or ether bond. In an embodiment, the laminate of the present disclosure is used for inhibiting permeation of fuel containing at least a compound (1) consisting of carbon atom, hydrogen atom and oxygen atom and having carbonyl group or ether bond. In an embodiment, the laminate of the present disclosure is a tube or hose and used for distributing and/or inhibiting permeation of fuel containing at least a compound (1) consisting of carbon atom, hydrogen atom and oxygen atom and having carbonyl group or ether bond.

That is, the present disclosure includes the use of a laminate (tube or hose) for distributing and/or inhibiting permeation of fuel containing at least a compound (1) consisting of carbon atom, hydrogen atom and oxygen atom and having carbonyl group or ether bond.

The present disclosure also includes a method for distributing fuel containing at least a compound (1) consisting of carbon atom, hydrogen atom and oxygen atom and having carbonyl group or ether bond, wherein a laminate (tube or hose) is used while the laminate is in contact with the fuel.

The compound (1) may be synthesized from hydrogen and carbon dioxide. The compound synthesized from hydrogen and carbon dioxide is also called a synthetic fuel, which is expected to contribute to reduction of carbon dioxide emissions. The present inventors have studied and found that while conventional laminates can inhibit the permeation of conventional fuels such as gasoline, diesel fuel, and alcohol fuel, they cannot sufficiently inhibit the permeation of such synthetic fuel. In other words, the compound (1) exhibits permeability different from conventional fuels such as gasoline, diesel fuel, and alcohol fuel. Therefore, conventional knowledge cannot be utilized in selecting the layer composition of the laminate used in contact with the fuel containing compound (1). However, the present inventors have conducted intensive studies and have found a laminate having low fuel permeability even for the compound (1).

The compound (1) is preferably at least one selected from the group consisting of a carbonate ester, a chain ether and a cyclic ether, more preferably at least one selected from the group consisting of a carbonate ester and a cyclic ether, and even more preferably a carbonate ester.

Examples of compounds (1) include dimethyl carbonate, diethyl carbonate, dimethyl ether, methyl tert-butyl ether (MTBE), oxymethylene dimethyl ether and 1,3-dioxolane. The fuel includes one or two or more of these compounds. The compound (1) is preferably at least one selected from the group consisting of dimethyl carbonate and diethyl carbonate.

The fuel may include the compound (1) alone or may include the compound (1) and another fuel.

Examples of fuels include:

a fuel containing the compound (1) alone,
a fuel containing the compound (1) and alcohol,
a fuel containing the compound (1) and gasoline,
a fuel containing the compound (1), alcohol and gasoline, and
a fuel containing the compound (1) and diesel fuel.

The content of the compound (1) in the fuel may be 0.1 to 100% by volume. The content of the compound (1) in the fuel may be 1% by volume or more, 5% by volume or more or 10% by volume or more. The content of the compound (1) in the fuel may be 90% by volume or less, 80% by volume or less, 60% by volume or less, 40% by volume or less or 20% by volume or less.

In an embodiment, the fuel contains the compound (1) and alcohol. The laminate of the present disclosure has excellent low permeability also to fuel containing the compound (1) and alcohol.

Alcohol preferably has 1 to 5 carbon atoms, and is more preferably at least one selected from the group consisting of methanol, ethanol, propanol and butanol, and even more preferably at least one selected from the group consisting of methanol and ethanol.

The content of alcohol in the fuel may be 10 to 99.9% by volume. The content of alcohol in the fuel may be 20% by volume or more, 40% by volume or more or 80% by volume or more. The content of alcohol in the fuel may be 99% by volume or less, 95% by volume or less or 90% by volume or less.

When alcohol in the fuel is methanol, the content of methanol may be 10 to 99.9% by volume. The content of methanol in the fuel may be 80% by volume or less, 50% by volume or less, 30% by volume or less, or 20% by volume or less.

In an embodiment, the fuel contains the compound (1) and gasoline. The laminate of the present disclosure has excellent low permeability also to fuel containing the compound (1) and gasoline.

Gasoline may be obtained by purifying crude oil. Gasoline usually has a boiling point of 30 to 220°C.

The content of gasoline in the fuel may be 10 to 99.9% by volume. The content of gasoline in the fuel may be 20% by volume or more, 40% by volume or more or 80% by volume or more. The content of gasoline in the fuel may be 99% by volume or less, 95% by volume or less or 90% by volume or less.

In an embodiment, the fuel contains the compound (1) and diesel fuel (gas oil). The laminate of the present disclosure exhibits excellent low fuel permeability even to fuels containing the compound (1) and diesel fuel.

The diesel fuel may be obtained by purification of crude oil. Diesel fuel usually has a boiling point of more than 220°C and 350°C or less.

The content of diesel fuel in the fuel may be 10 to 99.9% by volume. The content of diesel fuel in the fuel may be 20% by volume or more, 40% by volume or more or 80% by volume or more. The content of diesel fuel in the fuel may be 99% by volume or less, 95% by volume or less or 90% by volume or less.

(Fluororesin layer)

The laminate of the present disclosure comprises at least a fluororesin layer comprising a fluororesin containing chlorotrifluoroethylene (CTFE) unit.

As described above, the laminate of the present disclosure comprises at least a fluororesin layer, and since the fluororesin layer comprises a fluororesin containing CTFE unit, the laminate exhibits excellent low fuel permeability to fuels that consist of a carbon atom, a hydrogen atom, and an oxygen atom and contain a compound having a carbonyl group or an ether bond. Surprisingly, when a fluororesin other than a fluororesin containing CTFE unit, for example, a fluororesin containing ethylene unit and tetrafluoroethylene unit, is used, sufficient low fuel permeability cannot be obtained.

The fluororesin is a partially crystalline fluoropolymer, and is not a fluoroelastomer but a fluoroplastic. The fluororesin has a melting point and has thermoplasticity. The fluororesin may be melt-fabricable or may be non melt-processible. In respect that a tube can be produced by melt extrusion forming with high productivity, the fluororesin is preferably a melt-fabricable fluororesin.

In the present disclosure, melt-fabricability means that polymer can be melted and processed using a conventional processing device such as an extruder and an injection molding machine. Accordingly, the melt-fabricable fluororesin usually has a melt flow rate of 0.01 g/10 minutes or more and 500 g/10 minutes or less.

The polymer containing CTFE unit is preferably at least one selected from the group consisting of polychlorotrifluoroethylene [PCTFE] and a CTFE copolymer.

The content of CTFE unit in a polymer containing CTFE unit is preferably 1.0 mol% or more, more preferably 5.0 mol% or more, even more preferably 10.0 mol% or more, and particularly preferably 15.0 mol% or more, and is preferably 100 mol% or less, more preferably 75.0 mol% or less, even more preferably 50.0 mol% or less, and further preferably 30.0 mol% or less based on all monomer units because low fuel permeability is further improved.

Examples of polymers including CTFE unit include an ethylene/chlorotrifluoroethylene (CTFE) copolymer [ECTFE], polychlorotrifluoroethylene [PCTFE], a CTFE/tetrafluoroethylene (TFE) copolymer, and a TFE/vinylidene fluoride (VdF)/CTFE copolymer [VTC], and the polymer is preferably at least one selected from the group consisting of PCTFE, an ethylene/CTFE copolymer and a CTFE/TFE copolymer, and more preferably a CTFE/TFE copolymer from the viewpoint of low fuel permeability.

Examples of PCTFE include a CTFE homopolymer and a polymer containing CTFE unit and a small amount of a comonomer unit.

The melting point of PCTFE is preferably 150°C or more and more preferably 190°C or more, and preferably 230°C or less and more preferably 217°C or less. The melting point is the temperature corresponding to the maximum value in the heat-of-fusion curve when the temperature is raised at a rate of 10°C/min using a differential scanning calorimeter [DSC].

The flow value of PCTFE is preferably $1 \times 10^{-4}$ (cm$^3$/second) or more and preferably $5 \times 10^{-1}$ (cm$^3$/second) or less. The flow value is the volume of resin extruded per second when PCTFE is melted at 230°C in an elevated flow tester CFT-500D (manufactured by Shimadzu Corporation) and extruded from a nozzle with a diameter of 1 mm$\phi$ under a load of 100 kg.

The content of the CTFE unit in PCTFE is preferably 95 mol% or more, more preferably 98 mol% or more, and even more preferably 99 mol% or more, and preferably 100 mol% or less.

The comonomer constituting the comonomer unit PCTFE may have is not limited as long as the monomer is copolymerizable with CTFE. Examples thereof include TFE, ethylene, vinylidene fluoride, perfluoroalkyl vinyl ether and hexafluoroethylene.

The ethylene/CTFE copolymer (ECTFE) is a copolymer containing ethylene unit and CTFE unit. Preferably, the ethylene unit is 46 to 52 mol%, and the CTFE unit is 54 to 48 mol%, based on the total of the ethylene unit and the CTFE unit. ECTFE may be a binary copolymer composed solely of ethylene unit and CTFE unit and may further contain a polymerization unit based on a monomer copolymerizable with ethylene and CTFE (for example, a fluoroalkyl vinyl ether (PAVE) derivative).

The content of a polymerization unit based on a monomer copolymerizable with ethylene and CTFE is preferably 0.01 mol% or more and preferably 5 mol% or less based on the total of the ethylene unit, the CTFE unit, and the polymerization unit based on the copolymerizable monomer.

The MFR of ECTFE (230°C) is preferably 0.5 g/10 min or more and preferably 100 g/10 min or less. The MFR of ECTFE is measured at a temperature of 230°C under a load of 2.16 kg.

The CTFE/TFE copolymer contains CTFE unit and TFE unit. The CTFE/TFE copolymer is particularly preferably a copolymer containing CTFE unit, TFE unit, and a monomer ($\alpha$) unit derived from a monomer ($\alpha$) copolymerizable therewith.

The monomer ($\alpha$) is not limited as long as it is a monomer copolymerizable with CTFE and TFE, and examples include ethylene (Et), VdF, perfluoro(alkyl vinyl ether) [PAVE] represented by $CF_2=CF-ORf^1$ (wherein $Rf^1$ is a perfluoroalkyl group having 1 to 8 carbon atoms), a vinyl monomer represented by $CX^3X^4=CX^5(CF_2)_nX^6$ (wherein $X^3$, $X^4$, and $X^5$ are the same or different and a hydrogen atom or a fluorine atom; $X^6$ is a hydrogen atom, a fluorine atom, or a chlorine atom; n is an integer of 1 to 10), and an alkyl perfluorovinyl ether derivative represented by $CF_2=CF-OCH_2-Rf^2$ (wherein $Rf^2$ is a perfluoroalkyl group having 1 to 5 carbon atoms). In particular, at least one selected from the group consisting of PAVE, the vinyl monomer, and the alkyl perfluorovinyl ether derivative is preferable, and at least one selected from the group consisting of PAVE and HFP is more preferable.

PAVE is preferably perfluoro(alkyl vinyl ether) represented by $CF_2=CF-ORf^3$ (wherein $Rf^3$ represents a perfluoroalkyl group having 1 to 5 carbon atoms), such as perfluoro(methyl vinyl ether) [PMVE], perfluoro(ethyl vinyl ether) [PEVE], perfluoro(propyl vinyl ether) [PPVE], and perfluoro (butyl vinyl ether), more preferably at least one selected from the group consisting of PMVE, PEVE, and PPVE, and even more preferably PPVE.

In the alkyl perfluorovinyl ether derivative, $Rf^2$ is preferably a perfluoroalkyl group having 1 to 3 carbon atoms, and more preferably $CF_2=CF-OCH_2-CF_2CF_3$.

In a CTFE/TFE copolymer, the ratio between the CTFE unit and the TFE unit is preferably such that the CTFE unit accounts for 15.0 to 90.0 mol% and the TFE unit accounts for 85.0 to 10.0 mol%; more preferably the CTFE unit accounts for 15.0 to 50.0 mol% and the TFE unit accounts for 85.0 to 50.0 mol%; and further preferably the CTFE unit accounts for 15.0 to 30.0 mol% and the TFE unit accounts for 85.0 to 70.0 mol%.

The CTFE/TFE copolymer preferably has 90.0 to 99.9 mol% of the CTFE unit and the TFE unit in total and 0.1 to 10.0 mol% of the monomer ($\alpha$) unit. When the monomer ($\alpha$) unit is less than 0.1 mol%, moldability, environmental stress crack resistance, and fuel crack resistance are likely poor, and when exceeding 10.0 mol%, fuel barrier properties, heat resistance, and mechanical properties tend to be poor.

The CTFE/TFE copolymer is particularly preferably a CTFE/TFE/PAVE copolymer.

Examples of PAVE in the CTFE/TFE/PAVE copolymer include perfluoro(methyl vinyl ether) [PMVE], perfluoro(ethyl vinyl ether) [PEVE], perfluoro(propyl vinyl ether) [PPVE], and perfluoro(butyl vinyl ether). In particular, at least one selected from the group consisting of PMVE, PEVE, and PPVE is preferable, and PPVE is more preferable.

In the CTFE/TFE/PAVE copolymer, the PAVE unit is preferably 0.5 mol% or more and preferably 5 mol% or less, based on all monomer units.

The melting point of the CTFE/TFE copolymer is preferably 190°C or more, more preferably 210°C or more, even more preferably 220°C or more, particularly preferably 230°C or more, most preferably 240°C or more, preferably less than 324°C, more preferably 320°C or less, even more preferably 270°C or less, and most preferably 260°C or less.

The MFR (297°C) of the CTFE/TFE copolymer is preferably 0.5 g/10 min or more, more preferably 2.0 g/10 min or more, even more preferably 5.0 g/10 min or more, particularly preferably 7 g/10 min or more, preferably 100 g/10 min or less, more preferably 50 g/10 min or less, even more preferably 40 g/10 min or less, and particularly preferably 35 g/10 min or less. The MFR of the CTFE/TFE copolymer is measured at a temperature of 297°C under a load of 5 kg.

The fluororesin layer is preferably electrically conductive. By being electrically conductive, the fluororesin layer may prevent the laminate from being electrostatic even when friction between the laminate and the fuel generates static electricity.

The fluororesin layer preferably contains an electroconductive filler. The electroconductive filler easily imparts electric conductivity to the fluororesin layer and may prevent the laminate from being electrostatic even when friction between the laminate and the fuel generates static electricity.

The electroconductive filler is not limited, and examples include powders of electroconductive simple substances or fibers of electroconductive simple substances such as metal and carbon; powders of electroconductive compounds such as zinc oxide; and powders having the surface which has been subjected to electroconductive treatment.

The powders of electroconductive simple substances or the fibers of electroconductive simple substances are not limited, and examples include metal powders of copper, nickel, and the like; metal fibers of iron, stainless steel, and the like; and carbon black, carbon fiber, carbon fibril described in, for example, Japanese Patent Laid-Open No. 3-174018, carbon nanotube, and carbon nanohorn.

The powders having the surface which has been subjected to electroconductive treatment are powders obtained by performing electroconductive treatment on the surface of non-electroconductive powders such as glass beads and titanium oxide. A method for the electroconductive treatment is not limited, and examples include metal sputtering and electroless plating. Among the electroconductive fillers described above, carbon black is advantageous in view of economy and is thus preferably used.

The content of the electroconductive filler is suitably selected according to the type of the fluororesin, the electroconductive performance required for the laminate, the molding conditions, and the like, and is preferably 1 part by mass or more and 30 parts by mass or less based on 100 parts by mass of the fluororesin. The preferable lower limit is 5 parts by mass, and the preferable upper limit is 20 parts by mass.

In addition to the electroconductive filler, the fluororesin layer may contain various additives, e.g., reinforcing agents, fillers, UV absorbers, and pigments as long as the object of the present disclosure is not impaired. Properties of the fluororesin layer, such as surface hardness, abrasion resistance, electrostatic properties and weatherability can be improved by using such additives.

In the laminate of the present disclosure, the fluororesin layer (F) is preferably configured to be in contact with fuel. By forming the contact surface between the laminate and fuel with the fluororesin layer, excellent fuel resistance is imparted to the laminate and the durability of the laminate is improved. Furthermore, when the fluororesin layer is electrically conductive, the laminate may be prevented from being electrostatic by forming the contact surface between the laminate and fuel with the fluororesin layer even when friction between the laminate and the fuel generates static electricity.

(Non-fluorinated polymer layer)

The laminate of the present disclosure may include a non-fluorinated polymer layer containing a non-fluorinated polymer, in addition to the fluororesin layer. The non-fluorinated polymer does not contain a fluorine atom. A wide variety of polymers known as a thermoplastic resin may be used as the non-fluorinated polymer.

Examples of the non-fluorinated polymer include resins that have excellent mechanical strength and can primarily serve to maintain pressure resistance and the shape of formed articles (hereinafter referred to as structural member-type resins) such as an aliphatic polyamide resin, an aromatic polyamide resin, a polyolefin-based resin, a modified polyolefin resin, a vinyl chloride-based resin, a polyurethane resin, a polyester resin, a polyaramid resin, a polyimide resin, a polyamide-imide resin, a polyphenylene oxide resin, a polyacetal resin, a polycarbonate resin, an acrylic-based resin, a styrene-based resin, an acrylonitrile/butadiene/styrene resin (ABS), a cellulose-based resin, a polyether ether ketone resin (PEEK), a polysulfone resin, a polyether sulfone resin (PES), and a polyether imide resin,; and resins having high permeation resistance to fuel and gas (hereinafter referred to as permeation resistant resins) such as an ethylene/vinyl alcohol copolymer resin, a polyphenylene sulfide resin, a polybutylene naphthalate resin, a polybutylene terephthalate resin, and polyphthalamide (PPA).

Among these, the non-fluorinated polymer is preferably at least one selected from the group consisting of an aliphatic polyamide resin, an aromatic polyamide resin, a polyolefin resin, a modified polyolefin resins, and an ethylene/vinyl alcohol copolymer resin, more preferably at least one selected from the group consisting of an aliphatic polyamide resin, an aromatic polyamide resin, and an ethylene/vinyl alcohol copolymer resins, and further preferably at least one selected from the group consisting of an aliphatic polyamide resin and an aromatic polyamide resin.

When the laminate of the present disclosure comprises a non-fluorinated polymer layer containing the above-described structural member-type resin, the laminate exhibits excellent mechanical strength, and when the non-fluorinated polymer layer contains the above-described permeation-resistant resin, the laminate exhibits excellent permeation resistance to fuels.

Aliphatic polyamide resins and aromatic polyamide resins (both of which may be collectively referred to simply as "polyamide resins") are composed of polymers having an amide bond (-NH-C(=O)-) as a repeating unit in the molecule.

The polyamide resin may be either a so-called nylon resin composed of a polymer in which an amide bond within the molecule is bonded to an aliphatic structure or an alicyclic structure, or a so-called aramid resin composed of a polymer in which the amide bond within the molecule is bonded to an aromatic structure.

The polyamide resin (nylon resin) is not limited, and examples thereof include polyamide 6, polyamide 66, polyamide 11, polyamide 12, polyamide 610, polyamide 1010, polyamide 612, polyamide 6/66, polyamide 66/12, polyamide 46, metaxylylenediamine/adipic acid copolymers, polyamide 62, polyamide 92, polyamide 122, polyamide 142, and aromatic polyamides such as polyamide 6T and polyamide 9T. Two or more of these may be used in combination.

The aramid resin is not limited, and examples include polyparaphenylene terephthalamide and polymetaphenylene isophthalamide.

The polyamide resin may be a polymer in which a structure without an amide bond as a repeating unit is block-copolymerized or graft-copolymerized with a part of the molecule. Examples of such polyamide resins include polyamide-based elastomers such as a polyamide 6/polyester copolymer, a polyamide 6/polyether copolymer, a polyamide 12/polyester copolymer, and a polyamide 12/polyether copolymer. These polyamide-based elastomers are obtained by block copolymerization of a polyamide oligomer and a polyester oligomer via an ester bond, or obtained by block copolymerization of a polyamide oligomer and a polyether oligomer via an ether bond. Examples of the polyester oligomer include polycaprolactone and polyethylene adipate, and examples of the polyether oligomer include polyethylene glycol, polypropylene glycol, and polytetramethylene glycol. The polyamide-based elastomer is preferably a polyamide 6/polytetramethylene glycol copolymer or a polyamide 12/polytetramethylene glycol copolymer.

In particular, the polyamide resin is preferably polyamide 6, polyamide 66, polyamide 11, polyamide 12, polyamide 610, polyamide 1010, polyamide 612, polyamide 62, polyamide 6/66, polyamide 66/12, a polyamide 6/polyester copolymer, a polyamide 6/polyether copolymer, a polyamide 12/polyester copolymer, a polyamide 12/polyether copolymer and polyamide 9T, and two or more of these may be used in combination because sufficient mechanical strength can be obtained even if the layer composed of the polyamide resin is thin.

The amine value of the polyamide resin is preferably 10 (eq/$10^6$ g) or more and preferably 80 (eq/$10^6$ g) or less. When the amine value is within the above range, excellent interlayer adhesion can be achieved even in the case of coextrusion at a relatively low temperature. When the amine value is less than 10 (eq/$10^6$ g), interlayer adhesion may be insufficient. When the amine value exceeds 80 (eq/$10^6$ g), the mechanical strength of the laminate may be insufficient, and coloring is likely to occur during storage, thereby resulting in poor handling properties. A more preferable lower limit is 15 (eq/$10^6$ g), and a further preferable lower limit is 23 (eq/$10^6$ g). A more preferable upper limit is 60 (eq/$10^6$ g), and a further preferable upper limit is 50 (eq/$10^6$ g).

In the present disclosure, the amine value is obtained by dissolving 1 g of a polyamide resin in 50 mL of m-cresol under heating and titrating the solution with a 1/10 normal aqueous p-toluenesulfonic acid solution using thymol blue as an indicator. Unless otherwise specified, the amine value refers to the amine value of the polyamide resin before stacking. Although a portion of the amino groups of the polyamide resin before stacking may be consumed in adhesion to an adjacent layer, the amount consumed is extremely small relative to the entire layer, and therefore the amine value of the polyamide resin before stacking and the amine value in the laminate of the present disclosure are substantially the same.

The polyolefin-based resin is a resin having a monomer unit derived from a vinyl group-containing monomer that does not have a fluorine atom. The vinyl group-containing monomer that does not have a fluorine atom is not limited; however, for applications in which interlayer adhesion is required, a monomer having the above-described polar functional group is preferable.

The polyolefin-based resin is not limited, and examples include polyolefins such as polyethylene, polypropylene, high-density polyolefin, and low-density polyolefin, and also modified polyolefins obtained by modifying the above polyolefins with maleic anhydride or the like, epoxy-modified polyolefins, and amine-modified polyolefins. Among these, high-density polyolefin is preferable.

The ethylene/vinyl alcohol copolymer resin is obtained by saponifying an ethylene/vinyl acetate copolymer obtained from ethylene and vinyl acetate. The content ratio between ethylene and vinyl acetate to be copolymerized is suitably determined according to the proportion of the number of moles of the vinyl acetate unit to be specified by a formula mentioned below.

A preferable ethylene/vinyl alcohol copolymer resin is one in which the vinyl acetate unit X mol% and the saponification degree Y% satisfy $X \times Y/100 \geq 7$. If $X \times Y/100 < 7$, interlayer adhesion may be insufficient. $X \times Y/100 \geq 10$ is more preferable. The value of $X \times Y/100$ is a measure of a content of the hydroxyl group included by the ethylene/vinyl alcohol copolymer resin, and a larger value of $X \times Y/100$ means a higher content of the hydroxyl group included by the ethylene/vinyl alcohol copolymer resin.

The hydroxyl group is capable of contributing to adhesion between an EVOH layer and a counterpart material to be stacked, and when the hydroxyl group content of the ethylene/vinyl alcohol copolymer resin is high, interlayer adhesion in the laminate is improved. In the present disclosure, the "counterpart material to be laminated" described above refers to a material laminated contiguously.

In the present disclosure, the "vinyl acetate unit X mol%" refers to an average value of molar content Xi, which is the proportion of the number of moles of vinyl acetate [Ni] derived from vinyl acetate unit with respect to the total number of moles [N] of ethylene and vinyl acetate added in the molecule of the ethylene/vinyl alcohol copolymer resin, as represented by the following formula:

$$Xi\ (\%)\ =\ (Ni\ /\ N)\ \times\ 100$$

The vinyl acetate unit X mol% is a value obtained by measurement using infrared absorption spectroscopy [IR].

In the present disclosure, the "vinyl acetate unit" is a portion on the molecular structure of the ethylene/vinyl alcohol copolymer resin, meaning the portion derived from vinyl acetate. The vinyl acetate unit may be saponified and have a hydroxyl group or may not be saponified and have an acetoxy group.

The "saponification degree" is a percentage representing the proportion of the number of saponified vinyl acetate units with respect to the total of the number of saponified vinyl acetate unit and the number of unsaponified vinyl acetate units. The saponification degree is a value obtained by measuring using infrared absorption spectroscopy [IR].

Examples of ethylene/vinyl alcohol copolymer resin in which X and Y satisfy the formula described above include commercially available products such as EVAL F101 (manufactured by Kuraray Co., Ltd., vinyl acetate unit X = 68.0 mol%; saponification degree Y = 95%; $X \times Y/100 = 64.6$), Melthene H6051 (manufactured by TOSOH CORPORATION, vinyl acetate unit X = 11.2 mol%; saponification degree Y = 100%; $X \times Y/100 = 11.2$), and TECHNOLINK K200 (manufactured by Taoka Chemical Co., Ltd., vinyl acetate unit X = 11.2 mol%; saponification degree Y = 85%; $X \times Y/100 = 9.52$).

An ethylene/vinyl alcohol copolymer resin preferably has a MFR at 200°C of 0.5 g/10 min or more and 100 g/10 min or less. A case in which the MFR is less than 0.5 g/10 min or more than 100 g/10 min is not preferable because the difference between the melt viscosity of the ethylene/vinyl alcohol copolymer resin and the melt viscosity of the counterpart material tends to increase and thus unevenness may occur in the thickness of each layer. The preferable lower limit is 1 g/10 min, and the preferable upper limit is 50 g/10 min.

The melting point of the non-fluorinated polymer is preferably 50°C or higher and 400°C or lower. A more preferable lower limit is 100°C, and a further preferable lower limit is 150°C. A more preferable upper limit is 350°C, and a further preferable upper limit is 300°C.

The melting point is determined as a temperature corresponding to the maximum value in a heat-of-fusion curve obtained when the temperature is increased at a rate of 10°C/ min using a differential scanning calorimeter (DSC) (manufactured by Seiko Instruments Inc.).

The non-fluorinated polymer layer may contain an additive such as a stabilizer including a thermal stabilizer, a reinforcing agent, a filler, an ultraviolet absorber and a pigment as long as the object of the present disclosure is not impaired. Properties of the non-fluorinated polymer, such as thermal stability, surface hardness, abrasion resistance, electrostatic properties and weatherability can be improved by using such additives.

(Structure of laminate)

The laminate of the present disclosure comprises at least a fluororesin layer. The number of layers of the laminate of the present disclosure is not limited as long as the number is 2 or more. The number of layers of the laminate of the disclosure may be 2 to 5, and is preferably 2.

In the laminate of the present disclosure, while the fluororesin layer and the non-fluorinated polymer layer may be directly adhered, or may be adhered via another layer such as an adhesive layer, the two are preferably directly adhered.

The fuel permeation rate of the laminate of the present disclosure is preferably 15 g/m$^2$/day or less, more preferably 10 g/m$^2$/day or less, even more preferably 5.0 g/m$^2$/day or less, and particularly preferably 3.0 g/m$^2$/day or less.

The fuel permeation rate of the laminate is the rate at which a fuel including at least a compound (1) consisting of a carbon atom, a hydrogen atom and an oxygen atom and having a carbonyl group or an ether bond permeates the laminate. The fuel permeation rate of the laminate may be determined by making a tubular laminate, preparing fuel containing compound (1) at a predetermined concentration, sealing the fuel in the tubular laminate, leaving it at 60°C or 80°C, measuring the change in mass per hour, and calculating the fuel permeation rate from the mass change and the inner area of the tubular laminate.

The laminate of the present disclosure can have various shapes such as a film shape, a sheet shape, a tube (hose) shape, a bottle shape, and a tank shape. The film shape, the sheet shape, the tube shape, and the hose shape may have a wavy shape, a corrugated shape, a convoluted shape, or the like. The laminate of the present disclosure may be, for example, film, sheet, tube, hose, a bottle, a container, or a tank. The laminate of the present disclosure may be suitably used for fuel tubes or fuel hoses such as automobile fuel tubes or automobile fuel hoses, underground tubes or hoses for fuel supply facilities, automobile fuel tanks, and various automobile seals such as fuel pump O-rings.

In an embodiment, the laminate of the present disclosure is used as a member constituting a system for distributing fuel including at least a compound (1) consisting of a carbon atom, a hydrogen atom and an oxygen atom and having a carbonyl group or an ether bond. The system for distributing fuel means, for example, a system used for storing or supplying fuel. The member used for such a system include a tank, a tube, a hose, a cap, a valve, a diaphragm and a sealing material (an O-ring). The system for distributing fuel is used not only for automobiles but also in a facility for supplying fuel to a fuel tank of automobiles. Typical examples of members constituting the system for distributing fuel include fuel tubes or fuel hoses.

(Tube and hose)

The laminate of the present disclosure may be suitably used as a tube or hose. In the present disclosure, the "tube or hose" includes articles commonly referred to as a tube or hose, which is usually an article that has a shape capable of transporting fluid. In the present disclosure, the term "tube or hose" does not mean that a tube and a hose are different articles.

The tube or hose of the present disclosure may include, for example, a fluororesin layer/a non-fluorinated polymer layer as the innermost layer/the outermost layer, respectively.

The fuel permeation rate of the tube or hose of the present disclosure is preferably 15 $g/m^2/day$ or less, more preferably 10 $g/m^2/day$ or less, even more preferably 5.0 $g/m^2/day$ or less, and particularly preferably 3.0 $g/m^2/day$ or less.

The fuel permeation rate of the tube or hose is the rate at which a fuel including at least a compound (1) consisting of a carbon atom, a hydrogen atom and an oxygen atom and having a carbonyl group or an ether bond permeates the laminate. The fuel permeation rate of the tube or hose may be determined by preparing fuel containing compound (1) at a predetermined concentration, sealing the fuel in the tube or hose, leaving it at 60°C or 80°C, measuring the mass change per hour, and calculating the fuel permeation rate from the mass change and the inner area of the tube or hose.

The outer diameter of the tube or hose is preferably 2 mm or more, more preferably 3 mm or more, even more preferably 4 mm or more, and most preferably 6 mm or more, and preferably 20 mm or less, more preferably 18 mm or less, even more preferably 16 mm or less, and most preferably 14 mm or less.

The inner diameter of the tube or hose is preferably 1 mm or more, more preferably 2 mm or more, even more preferably 3 mm or more, most preferably 4 mm or more, preferably 15 mm or less, more preferably 13 mm or less, even more preferably 11 mm or less, and most preferably 10 mm or less.

The thickness (a difference between the outer diameter and the inner diameter) of the tube or hose is preferably 0.5 mm or more, more preferably 0.6 mm or more, and even more preferably 0.7 mm or more, and preferably 8 mm or less, more preferably 6 mm or less, even more preferably 4 mm or less, and particularly preferably 2 mm or less.

The thickness of the fluororesin layer in the laminate and the tube or hose is preferably 0.05 mm or more, more preferably 0.10 mm or more, and even more preferably 0.15 mm or more, and preferably 0.40 mm or less, more preferably 0.30 mm or less, and even more preferably 0.20 mm or less. The thickness of the fluororesin layer is the total thickness of the layers if the laminate and the tube or hose comprises two or more fluororesin layers.

The thickness of the non-fluorinated polymer layer in the laminate and the tube or hose is preferably 0.60 mm or more, more preferably 0.70 mm or more, and further preferably 0.80 mm or more, and preferably 0.95 mm or less, more preferably 0.90 mm or less, and further preferably 0.80 mm or less. The thickness of the non-fluorinated polymer layer is the total thickness of the layers if the laminate and the tube or hose comprises two or more non-fluorinated polymer layers.

When the laminate and the tube or hose have a two-layer structure of the innermost layer and the outermost layer, the thickness of the innermost layer is preferably 0.05 mm or more, more preferably 0.10 mm or more, and further preferably 0.15 mm or more, and preferably 0.40 mm or less, more preferably 0.30 mm or less, and further preferably 0.20 mm or less.

When the laminate and the tube or hose have a two-layer structure of the innermost layer and the outermost layer, the thickness of the outermost layer is preferably 0.60 mm or more, more preferably 0.70 mm or more, and further preferably 0.80 mm or more, and preferably 0.95 mm or less, more preferably 0.90 mm or less, and further preferably 0.80 mm or less.

The tube or hose may have a wavy shape, a corrugated shape, a convoluted shape, or the like. When the tube or hose has a wavy shape, by having a region in which a plurality of annular ridges and grooves in a wavy form are provided, one side of the annulus can be compressed and the other side can be expanded outward in that region, which enables ease of bending the laminate by a desired angle without causing stress fatigue or interlayer delamination.

The method of forming the wavy region is not limited, and the wavy region can be easily formed by creating a straight tube or hose and then, for example, mold-shaping the tube into a predetermined wavy shape or the like.

Examples of the method for producing the laminate of the present disclosure include:

(1) a method involving forming a laminate having a multilayer structure in one step by coextruding the polymers that form the respective layers to thermally fuse (melt-adhere) the layers (coextrusion forming);
(2) a method involving laminating the layers that are separately prepared by an extruder and adhering the layers by thermal fusion;
(3) a method involving forming a laminate by extruding by an extruder, onto the surface of a layer prepared in advance, a polymer that forms a layer to be adjacent to the aforementioned layer; and
(4) a method involving electrostatically coating the surface of a layer prepared in advance with a polymer that forms a layer to be adjacent to the aforementioned layer, and then heating the resulting coated product entirely or from the coated side to thermally melt the polymer subjected to coating, to thereby form a layer.

When the laminate of the present disclosure is a tube or a hose, a method corresponding to the above (2) is (2a) a method involving separately forming each cylindrical layer by an extruder and coating the layer to be an inner layer with the other layer as a heat-shrinkable tube to be in contact with the inner layer; a method corresponding to the above (3) is (3a) a method involving, first, forming a layer to be an inner layer by an inner-layer extruder and forming a layer that is to be in contact with the aforementioned layer on the outer circumferential surface thereof by an outer-layer extruder; and a method corresponding to the above (4) is (4a) a method involving electrostatically applying a polymer for forming an inner layer to the inside of a layer to be in contact with the inner layer, and then placing the resulting coated product in a heating oven to heat the coated product entirely or inserting a rod-shaped heating device into the cylindrical coated product to heat the cylindrical coated product from inside, to thereby thermally melting and molding the polymer for the inner layer.

As long as each layer of the laminate and the tube or hose of the present disclosure can be coextruded, the laminate is generally formed by the coextrusion forming of the above (1). Examples of the coextrusion forming include conventionally known multi-layer coextrusion production methods such as a multi-manifold method and a feed block method.

In the molding methods (2) and (3) above, after each layer is formed, the surface of each layer that comes into contact with another layer may be surface-treated in order to increase interlayer adhesion. Examples of such surface treatment include etching treatment such as sodium etching treatment; corona treatment; and plasma treatment such as low-temperature plasma treatment.

As a method for molding the laminate of the present disclosure, it is also possible to use a molding method involving laminating a plurality of materials in multiple stages by rotational molding. In this case, the melting point of the outer-layer material does not necessarily need to be higher than the melting point of the inner-layer material, and the melting point of the inner-layer material may be 100°C or more higher than the melting point of the outer-layer material. In this case, preferably there is also a heating part inside.

The tube or hose of the present disclosure may be suitably used as fuel tubes or fuel hoses such as automobile fuel tubes or automobile fuel hoses and underground tubes or hoses for fuel supply facilities.

Embodiments have been described above, but it will be understood that various changes in forms and details can be made without departing from the gist and the scope of the claims.

<1> A first aspect of the present disclosure provides

a laminate that comes into contact with a fuel,
wherein the fuel includes at least a compound (1) consisting of carbon atom, hydrogen atom and oxygen atom and having carbonyl group or ether bond, and
the laminate comprises at least a fluororesin layer comprising a fluororesin containing chlorotrifluoroethylene unit.

<2> A second aspect of the present disclosure provides
the laminate according to the first aspect, wherein the compound (1) is at least one selected from the group consisting of a carbonate ester, a chain ether and a cyclic ether.

<3> A third aspect of the present disclosure provides
the laminate according to the first or second aspect, wherein the compound (1) is at least one selected from the group consisting of dimethyl carbonate, diethyl carbonate, dimethyl ether, methyl tert-butyl ether, oxymethylene dimethyl ether and 1,3-dioxorane.

<4> A fourth aspect of the present disclosure provides
the laminate according to any of the first to third aspects, wherein the fuel further contains an alcohol.

<5> A fifth aspect of the present disclosure provides
the laminate according to any one of the first to fourth aspects, wherein the fuel further contains at least one selected from the group consisting of a gasoline and a diesel fuel.

<6> A sixth aspect of the present disclosure provides
the laminate according to any one of the first to fifth aspects, wherein a content of the compound (1) in the fuel is 0.1 to 20% by volume.

<7> A seventh aspect of the present disclosure provides
the laminate according to any one of the first to sixth aspects, wherein a content of chlorotrifluoroethylene unit in the fluororesin is 15.0 to 30.0 mol% based on all monomer units constituting the fluororesin.

<8> An eighth aspect of the present disclosure provides
the laminate according to any one of the first to seventh aspects, wherein the fluororesin contains chlorotrifluoroethylene unit and tetrafluoroethylene unit.

<9> A ninth aspect of the present disclosure provides
the laminate according to any one of the first to eighth aspects, wherein the fluororesin contains chlorotrifluoroethylene unit, tetrafluoroethylene unit, and a perfluoro(alkyl vinyl ether) unit.

<10> A tenth aspect of the present disclosure provides

the laminate according to the eighth or ninth aspect, wherein a content of the tetrafluoroethylene unit in the fluororesin is 85.0 to 70.0 mol% based on all monomer units constituting the fluororesin.

<11> An eleventh aspect of the present disclosure provides

the laminate according to any one of the first to tenth aspects, wherein the fluororesin layer is electrically conductive.

<12> A twelfth aspect of the present disclosure provides

the laminate according to any one of the first to eleventh aspects, wherein the fluororesin layer comes into contact with the fuel.

<13> A thirteenth aspect of the present disclosure provides

the laminate according to any one of the first to twelfth aspects, further comprising a non-fluorinated polymer layer comprising a non-fluorinated polymer.

<14> A fourteenth aspect of the present disclosure provides

the laminate according to the thirteenth aspect, wherein the non-fluorinated polymer is at least one selected from the group consisting of an aliphatic polyamide resin, an aromatic polyamide resin, a polyolefin resin, a modified polyolefin resin, and an ethylene/vinyl alcohol copolymer resin.

<15> A fifteenth aspect of the present disclosure provides

the laminate according to any one of the first to fourteenth aspects, wherein the fuel permeation rate of the laminate is 15 g/m$^2$/day or less.

<16> A sixteenth aspect of the present disclosure provides

a tube or hose formed of the laminate according to any one of the first to fifteenth aspects.

<17> A seventeenth aspect of the present disclosure provides

a tube or hose formed of the laminate according to any one of the first to fifteenth aspects, wherein the laminate comprises

a fluororesin layer comprising an electrically conductive filler and a fluororesin containing chlorotrifluoroethylene unit and tetrafluoroethylene unit, and
a non-fluorinated polymer layer comprising an aliphatic polyamide resin

in this order, and
the fluororesin layer is an innermost layer and comes into contact with a fuel.

EXAMPLES

Next, embodiments of the present disclosure will now be described by way of Examples, but the present disclosure is not limited solely to the Examples.

The numerical values of the Examples were measured by the following methods.

<Polymer composition (the monomer composition of the fluororesin)>

$^{19}$F-NMR measurement was conducted by using a nuclear magnetic resonance apparatus AC300 (manufactured by Bruker-Biospin AG) to determine the monomer composition of the fluorine resin (the content of the respective monomer units in the polymer) from the integrated values of the peaks. Depending on the kind of monomer, the results of elemental analysis were suitably combined to determine the monomer composition of the fluororesin.

<Melting point>

Thermal measurement was conducted using a differential scanning calorimeter RDC220 (manufactured by Seiko Instruments Inc.) in accordance with ASTM D 4591 at a temperature-increasing rate of 10°C/min, and the melting point of the fluororesin was determined from the peak of the endothermic curve obtained.

<Melt flow rate (MFR)>

The mass (g/10 min) of the fluororesin flowing out from a nozzle having an inner diameter of 2 mm and a length of 8 mm per 10 minutes at 265°C or 297°C under a load of 5 kg was determined as the MFR using a melt indexer (manufactured by Yasuda Seiki Seisakusho Ltd.) in accordance with ASTM D 1238.

<Fuel permeation rate>

The tubes obtained in Experimental Examples and Comparative Experimental Examples were cut and the inner diameter and the length were measured. A swagelok fitting was attached to both ends of the tube, the following fuels were filled into the tube, the lid was tightened, and the mass of the fuel-filled tube was measured. Next, in the measurement of the fuel permeation rate shown in Table 2, the tube was kept at 60°C, and in the measurement of the fuel permeation rate shown in Table 3, the tube was kept at 80°C. The mass was measured after 1,000 hours. The mass loss was calculated from each measured mass, and the fuel permeation rate ($g/m^2/day$) was calculated from the mass loss and the inner area of the tube.

In the measurement of the fuel permeation rate shown in Table 2, the following fuels containing CE10 (toluene/isooctane/ethanol = 45/45/10% by volume), CM15 (toluene/isooctane/methanol = 42.5/42.5/15% by volume), Fuel C (toluene/isooctane = 50/50% by volume), E (ethanol), M (methanol) and DMC (dimethyl carbonate) at an optional ratio were used.

Fuel (1-1): CE10 100% by volume
Fuel (1-2): Fuel C/E/DMC = 85/10/5 (% by volume)
Fuel (1-3): Fuel C/E/DMC = 80/10/10 (% by volume)
Fuel (1-4): Fuel C/E/DMC = 70/10/20 (% by volume)
Fuel (1-5): E/DMC = 10/90 (% by volume)
Fuel (1-6): DMC 100% by volume
Fuel (1-7): CM15 100% by volume
Fuel (1-8): Fuel C/M/DMC = 65/15/20 (% by volume)

In the measurement of the fuel permeation rate shown in Table 3, the following fuels containing diesel (diesel fuel) and DMC (dimethyl carbonate) at an optional ratio were used.

Fuel (2-1): diesel 100% by volume
Fuel (2-2): diesel/DMC = 95/5 (% by volume)
Fuel (2-3): diesel/DMC = 90/10 (% by volume)
Fuel (2-4): diesel/DMC = 80/20 (% by volume)

The following materials were used in Experimental Examples and Comparative Experimental Examples.

Fluororesin (1)

Polymer composition (mol%): CTFE/TFE/PPVE = 21.0/76.5/2.5
Melting point: 248°C
Melt flow rate (297°C): 7.0 g/10 min
Content of carbon black: 10 mass%

Fluororesin (2)

Polymer composition (mol%): TFE/Et/HFP/2,3,3,4,4,5,5-heptafluoro-1-pentene) = 45.5/44.4/9.5/0.6
Melting point: 197°C
Melt flow rate (265°C): 5.0 g/10 minute
Content of carbon black 12% by mass

Polyamide 12 (PA12)

Daiamid X7297 manufactured by Polyplastics-Evonik Corporation

Experimental Examples 1 and Comparative Experimental Example 1

Using a five-component five-layer tube extrusion apparatus equipped with a multimanifold (manufactured by PLABOR Research Laboratory of Plastics Technology Co., Ltd.), the materials were fed to the extruders, respectively, to form a two-layer tube having an outer diameter of 8 mm and an inner diameter of 6 mm so that each layer was composed of the material listed in Table 1.

Physical properties were measured using the resulting two-layer tubes by the method described above. The results are shown in Tables 2 and 3.

Comparative Experimental Example 2

Using a five-component five-layer tube extrusion apparatus equipped with a multimanifold (manufactured by PLABOR Research Laboratory of Plastics Technology Co., Ltd.), Polyamide 12 (PA12) was fed to the extruder to form a single-layer tube having an outer diameter of 8 mm and an inner diameter of 6 mm.

Physical properties were measured using the resulting single-layer tubes by the method described above. The results are shown in Table 3.

[Table 1]

Table 1

|  |  | Experimental Example 1 | Comparative Experimental Example 1 | Comparative Experimental Example 2 |
|---|---|---|---|---|
| Layer structure | Inner layer | Fluororesin (1) | Fluororesin (2) | - |
|  | Outer layer | PA12 | PA12 | PA12 |
| Thickness | Inner layer ($\mu$m) | 100 | 250 | - |
|  | Outer layer ($\mu$m) | 900 | 750 | 1000 |

[Table 2]

Table 2

|  | Fuel (% by volume) | DMC (% by volume) | Experimental Example 1 | Comparative Experimental Example 1 |
|---|---|---|---|---|
| Fuel permeation rate (g/m$^2$/day) | CE10 | 0 | 2.5 | 15.0 |
|  | FuelC/E/DMC (85/10/5) | 5 | 4.0 | 36.0 |
|  | FuelC/E/DMC (80/10/10) | 10 | 6.4 | 46.0 |
|  | FuelC/E/DMC (70/10120) | 20 | 7.2 | 71.0 |
|  | E/DMC (10/90) | 90 | 6.8 | - |
|  | DMC | 100 | 8.9 | 43.0 |
|  | CM15 | 0 | 6.2 | 31.0 |
|  | FuelC/M/DMC (65/15/20) | 20 | 10.0 | 140.0 |

[Table 3]

Table 3

| | Fuel (% by volume) | DMC (% by volume) | Experimental Example 1 | Comparative Experimental Example 1 | Comparative Experimental Example 2 |
|---|---|---|---|---|---|
| Fuel permeation rate (g/m$^2$/day) | diesel | 0 | 1.3 | 1.3 | 2.0 |
| | diesel/DMC (95/5) | 5 | 6.0 | 10.0 | - |
| | diesel/DMC (90/10) | 10 | 13.0 | 40.0 | 25.0 |
| | diesel/DMC (80/20) | 20 | 20.0 | 70.0 | 30.0 |

## Claims

1. A laminate that comes into contact with a fuel,

   wherein the fuel includes at least a compound (1) consisting of carbon atom, hydrogen atom and oxygen atom and having carbonyl group or ether bond, and
   the laminate comprises at least a fluororesin layer comprising a fluororesin containing chlorotrifluoroethylene unit.

2. The laminate according to claim 1, wherein the compound (1) is at least one selected from the group consisting of a carbonate ester, a chain ether and a cyclic ether.

3. The laminate according to claim 1 or 2, wherein the compound (1) is at least one selected from the group consisting of dimethyl carbonate, diethyl carbonate, dimethyl ether, methyl tert-butyl ether, oxymethylene dimethyl ether and 1,3-dioxorane.

4. The laminate according to any one of claims 1 to 3, wherein the fuel further contains an alcohol.

5. The laminate according to any one of claims 1 to 4, wherein the fuel further contains at least one selected from the group consisting of a gasoline and a diesel fuel.

6. The laminate according to any one of claims 1 to 5, wherein a content of the compound (1) in the fuel is 0.1 to 20% by volume.

7. The laminate according to any one of claims 1 to 6, wherein a content of chlorotrifluoroethylene unit in the fluororesin is 15.0 to 30.0 mol% based on all monomer units constituting the fluororesin.

8. The laminate according to any one of claims 1 to 7, wherein the fluororesin contains chlorotrifluoroethylene unit and tetrafluoroethylene unit.

9. The laminate according to any one of claims 1 to 8, wherein the fluororesin contains chlorotrifluoroethylene unit, tetrafluoroethylene unit, and a perfluoro(alkyl vinyl ether) unit.

10. The laminate according to claim 8 or 9, wherein a content of tetrafluoroethylene unit in the fluororesin is 85.0 to 70.0 mol% based on all monomer units constituting the fluororesin.

11. The laminate according to any one of claims 1 to 10, wherein the fluororesin layer is electrically conductive.

12. The laminate according to any one of claims 1 to 11, wherein the fluororesin layer comes into contact with the fuel.

13. The laminate according to any one of claims 1 to 12, further comprising a non-fluorinated polymer layer comprising a non-fluorinated polymer.

14. The laminate according to claim 13, wherein the non-fluorinated polymer is at least one selected from the group consisting of an aliphatic polyamide resin, an aromatic polyamide resin, a polyolefin resin, a modified polyolefin resin, and an ethylene/vinyl alcohol copolymer resin.

15. The laminate according to any one of claims 1 to 14, wherein the fuel permeation rate of the laminate is 15 g/m$^2$/day or less.

16. A tube or hose formed of the laminate according to any one of claims 1 to 15.

17. A tube or hose formed of the laminate according to any one of claims 1 to 15, wherein

the laminate comprises

a fluororesin layer comprising an electrically conductive filler and a fluororesin containing chlorotrifluoroethylene unit and tetrafluoroethylene unit, and
a non-fluorinated polymer layer comprising an aliphatic polyamide resin

in this order, and
the fluororesin layer is an innermost layer and comes into contact with a fuel.

## INTERNATIONAL SEARCH REPORT

| | International application No. |
|---|---|
| | **PCT/JP2024/028567** |

**A. CLASSIFICATION OF SUBJECT MATTER**

*B32B 27/30*(2006.01)i; *B32B 1/08*(2006.01)i; *C08L 27/12*(2006.01)i; *C08L 27/18*(2006.01)i; *C08L 101/00*(2006.01)i; *F16L 11/04*(2006.01)i
FI: B32B27/30 D; B32B1/08; C08L101/00; C08L27/18; C08L27/12; F16L11/04

According to International Patent Classification (IPC) or to both national classification and IPC

**B. FIELDS SEARCHED**

Minimum documentation searched (classification system followed by classification symbols)

B32B1/00-43/00; C08L27/12; C08L27/18; C08L101/00; F16L11/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-112261 A (UBE INDUSTRIES, LTD.) 27 July 2020 (2020-07-27) claims, paragraphs [0014]-[0015], [0055]-[0057], [0109]-[0111], [0117]-[0119], [0129]-[0134], [0211], [0232], [0254], [0293]-[0295], examples 34, 35 | 1-3, 5-17 |
| A | | 4 |
| X | JP 2012-101420 A (TOKAI RUBBER IND LTD.) 31 May 2012 (2012-05-31) claims, paragraphs [0001], [0030], examples 1-6 | 1-3, 13, 15-16 |
| A | | 4-12, 14, 17 |
| A | JP 2010-221578 A (KURASHIKI KAKO CO., LTD.) 07 October 2010 (2010-10-07) claims, paragraph [0073], tables 1-2 | 1-17 |
| A | JP 2006-2877 A (THE YOKOHAMA RUBBER CO., LTD.) 05 January 2006 (2006-01-05) claims, paragraphs [0001]-[0005], table 2 | 1-17 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 October 2024** | **29 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/028567**

| Patent document cited in search report | | | Publication date (day/month/year) | Patent family member(s) | Publication date (day/month/year) |
|---|---|---|---|---|---|
| JP | 2020-112261 | A | 27 July 2020 | (Family: none) | |
| JP | 2012-101420 | A | 31 May 2012 | US  2012/0199238  A1 claims, paragraphs [0002], [0034], examples 1-6 WO  2012/063646  A1 EP  2639054  A1 | |
| JP | 2010-221578 | A | 07 October 2010 | (Family: none) | |
| JP | 2006-2877 | A | 05 January 2006 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010030276 A
- JP 2022 A
- JP 58284 A
- JP 3174018 A